# DEMANDE DE BREVET EUROPEEN

(11) **EP 0 976 868 A1**
(43) Date de publication de la demande: **02.02.2000**
(21) Numéro de dépôt: 99401885.1
(22) Date de dépôt: 23.07.1999
(51) Int. Cl.: D06M 17/04, D06M 17/02

(54) **Entoilage thermocollant et procédé de son utilisation**

(30) Priorité: 31.07.1998 FR 9809883
(71) Demandeur: DHJ International, 67600 Selestat (FR)
(72) Inventeur: Finckenbein, Bernard, 67600 Selestat (FR); Barthelemy, Alain, 67600 Selestat (FR)
(74) Mandataire: Derambure, Christian

(57) **Abrégé**

L'invention concerne un entoilage thermocollant comprenant un support textile à base de fils et/ou de fibres, le support textile comportant une première face et une seconde face, la première face destinée à être contrecollée sur un vêtement ou une partie de vêtement à renforcer, étant munie d'au moins une couche d'une matière thermocollante et la seconde face opposée à la première face, étant munie d'au moins une couche d'une matière non thermocollante, déposée au moins entre les fils et/ou fibres du support textile.

## Description

L'invention se rapporte à un entoilage thermocollant et à son procédé de fabrication.

Elle se rapporte également à l'utilisation de cet entoilage, ainsi que les vêtements ou parties de vêtement comportant un tel entoilage.

Différents types d'entoilages thermocollants ont déjà été proposés pour le renfort de vêtements ou parties de vêtement.

Ces produits permettent notamment d'améliorer la tenue et la rigidité du vêtement des parties munies d'un entoilage. Des exemples d'utilisation de ces entoilages sont par exemple la confection de cols, de manchettes pour chemises, chemisiers ou équivalent. Ils sont alors appelés triplures.

Ainsi, le document FR-A-2 023 354 concerne une triplure thermosoudable pour cols ou manchettes de chemises.

La triplure décrite dans ce document comprend une structure textile revêtue sur au moins l'une de ses faces, soit localement, soit sur toute sa surface, de polymères thermocollants.

Le document FR-A-2 576 191 décrit un entoilage thermocollant comprenant une première couche de matériau thermofusible sur l'une des faces d'une structure textile et une seconde couche de matériau moins thermofusible que le premier sur la seconde face opposée à la première face de la structure textile. Une des couches peut être déposée de manière continue, tandis que l'autre est déposée sous forme de points.

Les triplures de l'art antérieur présentent cependant des inconvénients.

Ainsi, lors du contrecollage de la triplure sur un col ou une manchette, les régions du vêtement munies d'une triplure peuvent présenter des taches dues à des traversées des polymères thermocollants au travers de l'étoffe, endommageant ainsi le vêtement de manière irréparable.

Il est par ailleurs toujours recherché l'amélioration des caractéristiques des entoilages, notamment de toucher et de souplesse.

Egalement de proposer des entoilages thermocollants qui, tout en gardant des caractéristiques convenables, possèdent un prix de revient réduit, par exemple, en diminuant la quantité de structure textile utilisée.

L'invention vise à apporter une solution à ces inconvénients, en proposant un entoilage thermocollant qui conserve les caractéristiques habituelles d'entoilage, et présente en particulier un aspect, un toucher et une souplesse améliorés, tout en étant réalisé de manière économique.

A cet effet, l'entoilage thermocollant de l'invention comprend un support textile à base de fils et/ou fibres, le support textile comportant une première face et une seconde face, la première face destinée à être contrecollée sur un vêtement ou une partie de vêtement, étant munie d'au moins une couche d'une matière thermocollante et la seconde face, opposée à la première face, étant munie d'au moins une couche d'une matière non thermocollante, déposée au moins entre les fils et/ou fibres du support textile.

Selon d'autres caractéristiques, le support textile comprend au moins une couche d'un produit tissé, et/ou non tissé et/ou tricoté.

Le support textile peut également comprendre un mélange de ces produits.

Par exemple, le support textile comprend plusieurs couches de-produits non tissés, associés entre eux par exemple, par aiguilletage.

Selon une variante de réalisation, le support textile comprend une insertion d'au moins un fil de renfort dans le sens trame et/ou chaîne.

Le support textile peut être réalisé à partir de fibres et/ou fils identiques entre eux ou à partir d'un mélange de fibres et/ou fils.

Les fils et/ou fibres utilisés pour la réalisation du support textile peuvent être plats ou texturés, et de type monofilaments ou multifilaments.

Les fils texturés sont par exemple, obtenus par une technique classique de texturation par exemple, par fausse torsion.

Le support textile peut être réalisé à partir de fibres et/ou fils naturels, artificiels ou synthétiques.

Des fibres et/ou fils utilisables sont par exemple, réalisés à partir de polyamide, de polyester, de viscose, ainsi que les dérivés et/ou mélanges de ces produits.

Ils peuvent être également réalisés à partir de fibres de verre, de coton, de laine, de lin, ainsi que les dérivés et/ou les mélanges de ceux-ci.

Le poids du support est généralement choisi en fonction de son utilisation.

Ainsi, le support textile peut avoir un poids compris entre 20 et 200 g/m². De préférence, le poids est compris entre 40 et 200 g/m².

Des poids plus élevés ou au contraire plus faibles que ceux indiqués ci-dessus, seront cependant envisageables, en fonction par exemple d'utilisations particulières de l'entoilage de l'invention.

Selon l'invention, le support textile comporte sur sa seconde face opposée à la face destinée à être contrecollée, au moins une couche de matière non thermocollante.

La fonction principale de la couche non thermocollante est d'une part, de conférer à l'entoilage une opacité et une capacité d'anti-effilochage améliorées.

Une autre fonction de la couche non thermocollante est d'améliore les caractéristiques d'élasticité du produit. En particulier, lorsque la couche non thermocollante est déposée sur des supports textiles ayant des propriétés élastiques, le retour élastique après étirement de l'entoilage ainsi obtenu est facilité.

L'invention permet également d'utiliser un support textile de grammage plus faible, tout en conservant des caractéristiques, notamment de toucher et souplesse satisfaisantes.

Différentes matières non thermocollantes peuvent être utilisées dans le cadre de l'invention.

Par exemple, des polymères et/ou copolymères et/ou homopolymères à base acrylique, polyuréthane et/ou des polymères chlorés, ainsi que les dérivés et/ou mélanges de ces produits peuvent être envisagés.

Des exemples particuliers de polymères sont ceux à base d'acétate d'éthylvinyle.

La matière non thermocollante peut comprendre en outre au moins un agent de réticulation. Les agents de réticulation utilisés classiquement dans l'industrie textile, peuvent être utilisés.

Il peut s'agir notamment de résines de type mélamine, par exemple hexaméthylolée.

La matière non thermocollante peut comprendre un agent tensio-actif ou expanseur et un agent stabilisant tel que le stéarate d'ammonium.

Selon l'invention, le support textile est muni sur sa seconde face opposée à la première face recevant la matière non thermocollante, d'une matière thermocollante.

La matière thermocollante peut être choisie parmi notamment les polymères et/ou copolymères et/ou homopolymères à base polyester, acrylique, polyamide, polyuréthane, ou polyoléfine tel le polyéthylène, le polypropylène.

Elle peut se présenter avant le dépôt de la couche thermocollante, sous la forme d'une poudre ou d'une dispersion aqueuse. D'autres exemples de composés sous forme de dispersion aqueuse sont le dichlorure de polyvinyle et l'éthyle vinyle acétate.

Des exemples de polymères, copolymères et/ou homopolymères à base acrylique sont par exemple les dérivés d'acrylonitrile, les dérivés d'acrylamide, les dérivés d'ester acrylique, notamment le méthacrylamide, les méthacrylate d'alkyle inférieur, notamment de méthyle, éthyle, propyle, butyle ou pentyle.

Des exemples de polymères, copolymères, ou homopolymères à base de polyuréthane sont par exemple les polyisocyanates, les polyesters de polyols.

Selon un mode d'exécution, chaque face du support textile comporte une couche de polymères.

Selon un autre mode d'exécution, chaque face du support textile comporte plusieurs couches de polymères, les différentes couches étant obtenues à partir de polymères identiques ou différents entre eux.

L'invention vise également à protéger un procédé de fabrication d'un entoilage tel que défini précédemment.

Le procédé de l'invention comprend les étapes consistant à, à partir d'un support textile à base de fibres et/ou fils comportant une première face destinée à être contrecollée sur un vêtement ou partie de vêtement et une seconde face,
- déposer au moins une couche d'une matière thermocollante sur la première face destinée à être contrecollée,
- déposer sur la seconde face opposée à la première face au moins une couche d'une matière non thermocollante, la seconde couche étant déposée au moins entre les fils et/ou fibres du support textile.

Selon l'invention, le dépôt de la matière non thermocollante est appliquée par une enduction dite "bouche pores".

Ainsi, la matière non thermocollante se trouve alors déposée principalement entre les fibres et/ou fils formant le support textile, la majeure partie de la matière non thermocollante éventuellement présente sur les fils et/ou fibres étant éliminée.

Préalablement aux dépôts des couches de matières thermocollante et non thermocollante, un traitement d'apprêt sur le support textile peut être réalisé.

Le traitement d'apprêt permet de conférer au support textile une tenue améliorée et permet de garantir une stabilité dimensionnelle et une indéfroissabilité lors d'opérations d'entretien répétées des vêtements, par exemple, repassages, lavages.

Le choix d'effectuer un traitement d'apprêt dépend généralement de la nature du support textile utilisé.

Par exemple, dans le cas d'un support textile réalisé à partir de coton, le traitement d'apprêt consiste généralement en la fixation de la cellulose puis en sa réticulation.

Ces traitements d'apprêt sont connus et couramment utilisés dans l'industrie textile et ne seront donc pas décrits plus en détail ici.

Selon un mode d'exécution, le dépôt de la couche de matière thermocollante sur la seconde face est effectué préalablement au dépôt de la couche de matière non thermocollante sur la première face.

Selon un autre mode d'exécution, le dépôt de la couche de matière non thermocollante sur la seconde face est effectué préalablement au dépôt de la couche de matière thermocollante sur la première face.

La couche de matière thermocollante est généralement distribuée sous forme de points ou de lignes.

Les points ou lignes de matière thermocollante sont de préférence déposés sur les fibres et/ou fils du support textile.

Le dépôt des différentes couches, de matière thermocollante et de matière non thermocollante peut être réalisé par enduction.

L'enduction peut être réalisée en utilisant des dispositifs classiques tels que les dispositifs par raclage, notamment raclage en l'air, raclage sur tablier, raclage sur cylindre, et également les dispositifs d'enduction à cadre rotatif.

Les couches de matières thermocollante et non thermocollante peuvent être également déposées par pulvérisation, transfert ou par la technique de rouleaux inverses (de l'anglais "reverse roll").

De tels dispositifs d'enduction sont connus et ne seront donc pas décrits plus en détail ici.

La matière non thermocollante peut se présenter sous différentes formes.

Selon une variante de réalisation, la couche de matière non thermocollante est déposée sous la forme d'une pâte, par enduction par raclage en l'air.

Selon une autre variante de réalisation, la couche de matière non thermocollante est déposée sous la forme d'une mousse.

La mousse peut être mécanique ou chimique.

La mousse est formée par l'addition d'un agent tensio-actif ou expanseur et d'un agent stabilisant tel que le stéarate d'ammonium, par exemple, pour une mousse mécanique.

Le support textile enduit est ensuite séché à une température, de préférence étagée, variant entre environ 90° et environ 150°C.

Le séchage peut être réalisé à l'aide de tous moyens conventionnels tels que air chaud, infrarouge, etc.

Cette opération de séchage est réalisée en faisant défiler par exemple, le support textile enduit dans un four tunnel.

L'invention vise également à protéger les utilisations de l'entoilage de l'invention.

L'entoilage de l'invention peut être utilisé pour le renfort de vêtements ou parties de vêtement.

L'entoilage est utilisé comme triplure dans la réalisation de cols ou manchettes de chemise, chemisiers ou équivalents.

L'invention se rapporte également aux vêtements ou parties de vêtement comprenant au moins un entoilage de l'invention, tels que veste, ceinture, plastron, chemise, chemisier, col, manchette de chemises, de chemisiers ou équivalents.

On donne ci-après des exemples de réalisation de l'invention.

### Exemple 1

Un support textile, constitué de fibres de coton, d'un poids de 126 g/m" et de contexture C_{CH}20/C_{TR}20 - Nm_{CH}34/Nm_{TR}34 est utilisé.

Dans cette contexture, C_{CH}20/C_{TR}20 indique les comptes en fils par cm et Nm_{CH}34/Nm_{TR}34 indique les numéros métriques des fils utilisés. Par convention, la chaîne est quantifiée avant la trame.

Le support est blanchi et apprêté de façon à obtenir un textile dit extra-souple.

Le support textile est ensuite alimenté vers un premier dispositif d'enduction comportant un cylindre gravé de 28 mesh linéaire.

Une couche de matière thermocollante consistant en du polyéthylène haute densité (0,956) et de Melt index 20, commercialisé sous la dénomination SCHAETTIFFIX 1820 (marque déposée) par la société SCHAETTI (Suisse), est déposée sur la face du support textile, destinée à être contrecollée ultérieurement.

Cette couche est déposée avec un grammage de 28 g/m".

Une pâte d'enduction d'une viscosité de 2 Pa.s comprenant par rapport au poids total:
- 100 parties en poids d'un liant acrylique à 50 % (Tg : -15°C) commercialisé sous la dénomination APPRETAN N 9410 (marque déposée par la société CLARIANT France) ;
- 20 parties en poids d'eau ;
- 10 parties en poids de stéarate d'ammonium ;
- 3 parties en poids de sulfosuccinamate ;
- 5 parties en poids de résine mélamine commercialisée sous la dénomination CASSURIT HML (marque déposée par la société CLARIANT)
- 0,4 partie en poids d'ammoniaque ;
- 2 parties en poids d'épaississant acrylique acide commercialisé sous la dénomination ACRYSOL ASE 60 (marque déposée par la société ROHM & HAAS Allemagne) ;
est utilisée comme matière non thermocollante.

Cette pâte est traitée de façon à se présenter sous la forme d'une mousse mécanique avec un mousseur commercialisé sous la dénomination STORK (marque déposée).

La matière non thermocollante sous forme d'une mousse possède une densité de 250 g/l.

Le support ainsi enduit de la couche thermocollante est ensuite dirigé vers un second dispositif d'enduction comportant un système de râclage en l'air.

La pâte ainsi moussée est ensuite déposée, avec un grammage de 15 g/m", sur la face du support textile opposée à celle destinée à être contrecollée, avec une râcle ayant un profil de 5 mm de diamètre.

Le support textile ainsi enduit est ensuite séché dans un four tunnel (rame BRUCKNER) à sept compartiments, à une température étagée variant entre 110 et 150°C, à une vitesse de 20 m/min.

L'entoilage obtenu possède les mêmes caractéristiques qu'un tissu de 220 g/m" de contextureC_{CH}20/C_{TR}20 - Nm_{CH}34/Nm_{TR}34 21x19 - 20x20.

### Exemple 2

Un support textile, constitué de fibres de coton, d'un poids de 80 g/m" et de contexture C_{CH}22/C_{TR}17 - Nm_{CH}50/Nm_{TR}50 est utilisé.

Préalablement à toute enduction, ce support est apprêté.

Le support est ensuite alimenté vers un premier dispositif d'enduction comprenant un cylindre gravé de 25 mesh linéaire.

Le support textile est enduit avec une couche de matière thermocollante consistant en du polyéthylène haute densité (0,951) Melt index 9, commercialisé sous la dénomination SCHAETIFFIX 1800 (société SCHAETTI), ayant un point de fusion de 130°C, à un grammage de 25 g/m", sur la face du support textile destinée au contrecollage.

Une pâte de viscosité 28 Pa.s comprenant par rapport au poids total:
- 100 parties en poids de liant acrylique (Tg + 15°C) à 45 % commercialisé sous la dénomination PRIMAL HA12 (société ROHM & HAAS) ;
- 40 parties en poids d'eau ;
- 0,05 partie en poids d'antimousse commercialisé sous la dénomination NOPCO NXZ (marque déposée par la société SIDOBRE SINNOVA Allemagne) ;
- 3 parties en poids de résine mélamine hexaméthylolée commercialisée sous la gamme CASSURIT (société CLARIANT)
- 0,3 partie en poids d'ammoniaque ;
- 0,5 partie en poids d'épaississant acrylique acide, commercialisé sous la dénomination ACRYSOL ASE 60 (société ROHM & HAAS), est préparée.

Le support textile enduit de couche thermocollante est dirigé vers un autre dispositif d'enduction, comprenant un système de râclage en l'air. La râcle utilisée a un profil de 2 mm de diamètre.

La pâte est déposée sur la face du support textile opposée à la face destinée au contrecollage, avec un grammage de 15 g/m".

L'entoilage obtenu est séché dans un four tunnel (rame BRUCKNER) à sept compartiments, à une température étagée entre 120°C et 150°C, à une vitesse de 25 m/min.

L'entoilage obtenu possède une raideur et des caractéristiques équivalentes à celles d'un tissu enduit de 126 g/m".

### Exemple 3

Un support textile, constitué de 100% de fibres de coton, d'un poids de 47 g/m", et d'une contexture C_{CH}31/C_{TR}20 - Nm_{CH}120/Nm_{TR}120, est utilisé.

Le support est apprêté de façon à avoir un touché extra souple.

Une mousse mécanique de viscosité de 25 Pa.s et d'une densité de 160 g/l comprenant par rapport au poids total:
- 100 parties en poids de liant acrylique à 45 % (Tg-30°C) commercialisé sous la dénomination PRIMAL TR934 (société ROHM & HAAS)
- 3 parties en poids de sulfosuccinamate ;
- 8 parties en poids de stéarate d'ammonium à 30 % ;
- 5 parties en poids de résine mélamine hexaméthylolée commercialisée sous la gamme CASSURIT (société CLARIANT)
- 0,3 parties en poids d'ammoniaque ;
- 3 parties en poids d'épaississant acrylique acide, commercialisé sous la dénomination ACRYSOL ASE 60 (société ROHM & HAAS), est utilisée pour la couche de matière non thermocollante.

Le support textile est alimenté vers un système d'enduction comprenant un premier dispositif de râclage en l'air.

La mousse mécanique est déposée sur la face du support textile, opposée à celle destinée à être contrecollée avec un grammage de 6 g/m".

Le support textile enduit de la couche de matière non thermocollante est séché dans un four tunnel (rame BRUCKNER) à sept compartiments, chauffé à une température étagée entre 100 et 150°C.

Il est ensuite dirigé vers un autre dispositif d'enduction comprenant un cylindre 28 mesh aléatoire.

Une matière thermocollante comprenant du polyéthylène haute densité (0,956) Melt index 20 commercialisé sous la dénomination SCHAETTIFIX 1820 (société SCHAETTI), ayant un point de fusion de 125°C, est déposée sur la face du support textile destinée à être contrecollée, avec un grammage de 12 g/m".

L'entoilage obtenu présente une meilleure opacité et un toucher nerveux très souple.

### Exemple 4

Un support textile constitué de fibres de coton d'un poids de 80 g/m² de contexture C_{CH}22/C_{TR}17,3 - Nm_{CH}50/Nm_{TR}50 est utilisé.

Le support est blanchi et apprêté de façon à favoriser l'extensibilité et à obtenir un toucher dit extra souple.

Le support textile est ensuite alimenté vers un premier dispositif d'enduction comportant un cylindre gravé en 28 mesh linéaire.

Le support textile est enduit avec un dépôt sous forme de points de matière thermocollante consistant en une poudre de copolyester de point de fusion 110 - 125 °C, Melt index 42, commercialisée sous la dénomination GRILTEX D1260 (marque déposée par la société EMS). Le dépôt est réalisé sur la face destinée à être contrecollée avec un grammage de 25 g/m².

Une pâte d'enduction de viscosité 2 Pa.s comprenant par rapport au poids total :
- 100 parties en poids d'une dispersion acylique élastomérique à 50 % (Tg - 43°C) commercialisée sous la dénomination HYSTRETCH V43 BF GOODRICH,
- 20 parties en eau;
- 10 parties en stéarate d'ammonium,
- 3 parties en sulfocuccinamate,
- 5 parties de résine mélamine hexaméthylolée commercialisé sous la gamme CASSURIT (société CLARIANT),
- 0,4 partie en poids d'ammoniaque,
- 2 parties en poids d'épaississant acrylique acide commercialisé sous la dénomination ACRYSOL ASE 60 (société ROHM & HAAS), est utilisée comme matière non thermocollante.

Cette pâte est moussée pour une densité de 200 g/l.

Le support enduit de matière thermocollante est ensuite dirigé vers un second dispositif d'enduction comportant un système de raclage en l'air.

La pâte ainsi moussée est ensuite déposée avec un grammage de 10 g/m2 sur la face du support textile opposée à celle destinée à être contrecollée avec une racle ayant un profil de 2 mm de diamètre.

Le support textile est séché dans un four tunnel (rame BRUCKNER) à sept compartiments à une température étagée variant entre 110 °C et 150 °C et à une vitesse de 20 m/mm.

L'entoilage obtenu possède des caractéristiques élastiques tel qu'il peut être utilisé pour la confection de chemise réalisée soit avec des tissus extensibles contenant du Lycra (marque déposée par la société DUPONT) par exemple, ou soit avec des tissus mailles.

## Revendications

1. Entoilage thermocollant comprenant un support textile à base de fils et/ou de fibres, le support textile comportant une première face et une seconde face, la première face destinée à être contrecollée sur un vêtement ou une partie de vêtement à renforcer, étant munie d'au moins une couche d'une matière thermocollante, caractérisé en ce que la seconde face opposée à la première face, est munie d'au moins une couche d'une matière non thermocollante, déposée au moins entre les fils et/ou fibres du support textile.

2. Entoilage selon la revendication 1, caractérisé en ce que la couche de matière thermocollante est distribuée sous forme de points ou de lignes.

3. Entoilage selon la revendication 1 ou 2, caractérisé en ce que la matière non thermocollante comprend des polymères et/ou copolymères et/ou homopolymères à base acrylique, polyuréthane, acétate d'éthylvinyle, et/ou de polymères chlorés, ainsi que des dérivés et/ou mélanges de ces produits.

4. Entoilage selon l'une quelconque des revendications 1 à 3, caractérisé en ce que la matière non thermocollante comprend des résines de type mélamine, par exemple, hexaméthylolée.

5. Entoilage selon l'une quelconque des revendications 1 à 4, caractérisé en ce que la matière thermocollante comprend des polymères et/ou copolymères et/ou homopolymères à base d'acrylique, polyester, polyamide, polyuréthane, polyoléfine de type polyéthylène, polypropylène.

6. Entoilage selon l'une quelconque des revendications 1 à 5, caractérisé en ce que le support textile comprend au moins une couche d'un produit tissé et/ou non tissé et/ou tricoté.

7. Entoilage selon la revendication 6, caractérisé en ce que le support textile comprend au moins une insertion d'au moins un fil de renfort dans le sens trame et/ou chaîne.

8. Entoilage selon la revendication 6 ou 7, caractérisé en ce que le support textile comprend des fibres et/ou fils monofilaments ou multifilaments, plats ou texturés.

9. Entoilage selon la revendication 8, caractérisé en ce que les fibres et/ou fils sont naturels, artificiels ou synthétiques.

10. Entoilage selon la revendication 8 ou 9, caractérisé en ce que les fibres et/ou fils sont réalisés à partir de fibres de verre, de coton, laine, lin, polyester, viscose, polyamide, ainsi que les dérivés et/ou mélanges de ces produits.

11. Entoilage selon l'une quelconque des revendications 1 à 10, caractérisé en ce que la matière non thermocollante répond à la composition suivante, exprimée en parties en poids par rapport au poids total :
- liant acrylique 100
- eau 40
- antimousse 0,05
- résine mélamine hexaméthylolée 3
- ammoniaque 0,3
- épaississant acrylique salifié 0,5

12. Entoilage selon l'une quelconque des revendications 1 à 10, caractérisé en ce que la matière non thermocollante répond à la composition suivante, en parties en poids par rapport au poids total :
- liant acrylique 100
- stéarate d'ammonium 30% 8 à 10
- résine mélamine 5
- ammoniaque 0,3 à 0,4
- épaississant acrylique acide 2 à 3

13. Entoilage selon l'une quelconque des revendications 1 à 12, caractérisé en ce que le support textile a un poids compris entre 40 et 200 g/m².

14. Utilisation d'un entoilage selon l'une quelconque des revendications 1 à 13 pour le renfort de vêtement(s) ou partie(s) d'un vêtement.

15. Utilisation d'un entoilage selon la revendication 14 comme triplure pour le renfort d'au moins un col et/ou au moins une manchette de vêtement.

16. Vêtement ou partie de vêtement, caractérisé en ce qu'il comprend au moins un entoilage selon l'une quelconque des revendications 1 à 13.

17. Vêtement ou partie de vêtement selon la revendication 16, caractérisé en ce qu'il consiste en une veste, une ceinture, un plastron, une chemise ou équivalents, un col, une manchette.

18. Procédé de fabrication d'un entoilage thermocollant comprenant un support textile à base de fibres et/ou fils comportant une première face et une seconde face, le procédé comprenant les étapes consistant à :
- déposer au moins une couche d'une matière thermocollante sur la première face destinée à être contrecollée sur un vêtement ou une partie de vêtement,
- déposer sur la seconde face opposée à la première face au moins une couche d'une matière non thermocollante, au moins entre les fibres et/ou fils du support textile.

19. Procédé selon la revendication 18, caractérisé en ce que le dépôt de la couche de matière thermocollante sur la première face est réalisé préalablement au dépôt de la couche de matière non thermocollante sur la seconde face.

20. Procédé selon la revendication 18, caractérisé en ce que le dépôt de la couche de matière non thermocollante sur la seconde face est réalisé préalablement au dépôt de la couche de matière thermocollante sur la première face.

21. Procédé selon l'une quelconque des revendications 18 à 20, caractérisé en ce que la couche de matière thermocollante est déposée en points ou en lignes.

22. Procédé selon l'une quelconque des revendications 18 à 21, caractérisé en ce que préalablement aux dépôts des matières thermocollante et/ou non thermocollante, on réalise un traitement d'apprêt sur le support textile.

23. Procédé selon l'une quelconque des revendications 18 à 22, caractérisé en ce que le support textile enduit est séché, après les dépôts des couches de matières non thermocollante et thermocollante, à une température de préférence étagée, variant entre environ 90° C et environ 150 °C.

24. Procédé selon l'une quelconque des revendications 18 à 23, caractérisé en ce que la couche de matière non thermocollante est déposée sous la forme d'une mousse.

25. Procédé selon l'une quelconque des revendications 18 à 23, caractérisé en ce que la couche de matière non thermocollante est déposée sous la forme d'une pâte.

26. Procédé selon l'une quelconque des revendications 18 à 25, caractérisé en ce que les couches de matières non thermocollante et/ou thermocollante sont déposées par raclage, cadre rotatif, pulvérisation, transfert ou par la technique de rouleaux inverses.
